# EUROPEAN PATENT APPLICATION

(11) **EP 1 837 688 A1**
(43) Date of publication of application: **26.09.2007**
(21) Application number: 07104371.5
(22) Date of filing: 16.03.2007
(51) Int. Cl.: G02B 6/36, G02B 6/43

(54) **Fiber pattern applicator system and method**

(30) Priority: 20.03.2006 US 425163
(71) Applicant: Honeywell International, Inc., Morristown, New Jersey 07962 (US)
(72) Inventor: Raver, Christopher W, Palmetto, IL 34221 (US); Fleischman, Scott G., Palmetto, IL 34221 (US)
(74) Representative: Haley, Stephen

(57) **Abstract**

Fiber pattern applicator systems and methods are provided such as for use in creating sensors. A fiber pattern applicator system comprises a fiber writer device that includes a hollow tube having a fiber channel extending therethrough from a proximal end to a distal end. A fiber input aperture is located at the proximal end of the tube, and a fiber guide tip is located at the distal end of the tube. A fiber spool is provided with a continuous fiber material wound thereon. The fiber material is threaded through the fiber channel from the input aperture through the guide tip of the fiber writer device. In a method of forming a fiber pattern on a substrate, the continuous fiber material is applied from the fiber guide tip in a predetermined pattern to a surface of the substrate. The fiber material adheres to the surface of the substrate at a position where initially applied from the guide tip.

## Description

The U.S. Government may have certain rights in the present invention as provided for by the terms of Contract No. FA8650-04-C-8011 with the USAF.

Functional patterns containing fiber optic strands such as used in some anti-tamper sensors rely on dense impenetrable patterned areas, which are very difficult to produce without containing voids. Methods currently used for creating a dense, tight pattern of side-by-side fiber optic strands or any single strand material are very labor intensive. Thus, there is a need for better techniques that allow dense fiber packages to be produced more efficiently.

### In The Drawings:

Features of the present invention will become apparent to those skilled in the art from the following description with reference to the drawings. Understanding that the drawings depicts only typical embodiments of the invention and are therefore not to be considered limiting in scope, the invention will be described with additional specificity and detail through the use of the accompanying drawings, in which:
Figure 1 is a schematic depiction of a fiber pattern applicator system and method according to one embodiment of the invention; and
Figure 2 is a schematic depiction of a fiber pattern applicator system and method according to another embodiment of the invention.

In the following detailed description, embodiments are described in sufficient detail to enable those skilled in the art to practice the invention. It is to be understood that other embodiments may be utilized without departing from the scope of the present invention. The following detailed description is, therefore, not to be taken in a limiting sense.

The present invention relates to systems and methods that facilitate the application of patterns utilizing a single strand or fiber. For example, the invention provides for laying a continuous strand or fiber side-by-side in a dense impenetrable area for sensor development. The invention can be used to customize a pattern to any application needed.

A fiber pattern applicator system of the invention generally comprises a fiber writer device that includes a hollow tube having a fiber channel extending therethrough from a proximal end to a distal end. A fiber input aperture is located at the proximal end of the tube, and a fiber guide tip is located at the distal end of the tube. A fiber spool is provided with a continuous fiber material wound thereon. The fiber material is threaded through the fiber channel from the input aperture through the fiber guide tip of the fiber writer device.

In a method of forming a fiber pattern on a substrate, the continuous fiber material is applied from the fiber guide tip in a predetermined pattern to a surface of the substrate. The fiber material adheres to the surface of the substrate at a position where initially applied from the guide tip. Further details of the present invention are discussed hereafter.

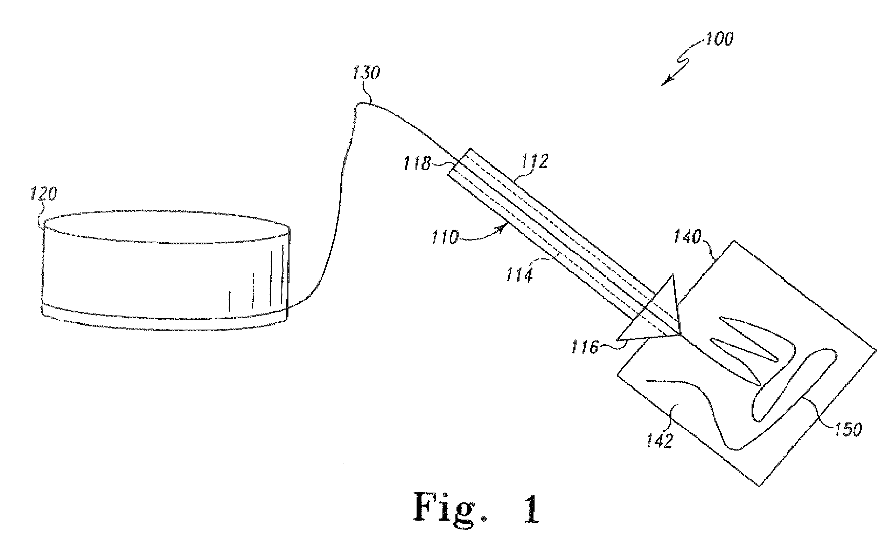

Figure 1 is a schematic depiction of a fiber pattern applicator system 100 according to one embodiment of the invention. As shown, fiber pattern applicator system 100 includes a fiber writer device 110 and a fiber spool 120. The fiber writer device 110 includes an elongated hollow tube 112 having a fiber channel 114 extending through the length thereof. A fiber guide tip 116 is located at a distal end of fiber writer device 110 and is opposite from a fiber input aperture 118 at a proximal end. A continuous fiber material 130 is wound on fiber spool 120. One end of fiber material 130 is threaded into input aperture 118 through channel 114 and exits guide tip 116.

The fiber writer device can be composed of a variety of materials, such as plastics, so long as the material does not damage the fiber when used in the fiber writer device. A variety of fiber strands can be used in the present system, including optical fibers, metallic wires, or any long strand materials such as thread, yarn, rope, and the like. The fiber spool can be any of a variety of conventional spools that can be used to wind a fiber material.

During operation of fiber pattern applicator system 100, a substrate 140 is provided that has a tacky surface 142. The fiber material 130 that is threaded through fiber writer device 110 is applied to surface 142 of substrate 140 in a desired pattern 150. The fiber material 130 adheres to tacky surface 142 at a position where initially applied from guide tip 116. A suitable exemplary substrate is a double-sided adhesive tape to which the fiber material is adhered. The adhesive on the tape can be an epoxy material that holds the fiber material in place during the pattern creation.

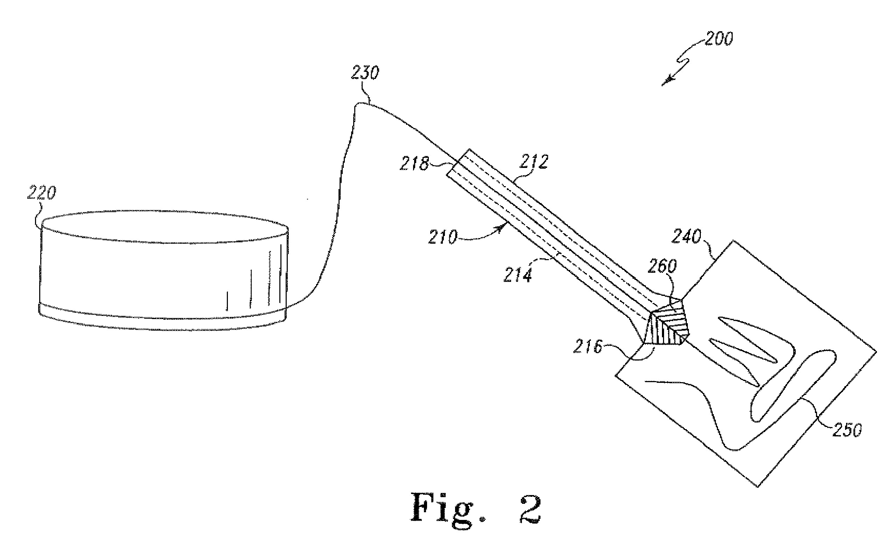

Figure 2 is a schematic depiction of a fiber pattern applicator system 200 according to another embodiment of the invention. As shown, fiber pattern applicator system 200 includes a fiber writer device 210 and a fiber spool 220. The fiber writer device 210 includes an elongated hollow tube 212 having a fiber channel 214 extending through the length thereof. A fiber guide tip 216 is located at a distal end of fiber writer device 210 and is opposite from a fiber input aperture 218 at a proximal end. A continuous fiber material 230 is wound on fiber spool 220. One end of fiber material 230 is threaded into input aperture 218 through channel 214 and exits guide tip 216.

The fiber guide tip 216 also includes a tacky or adhesive material disposed therein. An adhesive delivery mechanism 260 such as a sponge saturated with an adhesive material can be located in guide tip 216. When fiber material 230 passes through guide tip 216, the adhesive material is placed on the outside surface of the fiber.

During operation of fiber pattern applicator system 200, fiber material 230 that is threaded through fiber writer device 210 is applied to a surface of a substrate 240 in a desired pattern 250. As fiber material 230 passes through guide tip 216, fiber material 230 is drawn through delivery mechanism 260 which applies the adhesive material evenly on the surface of the fiber. The fiber material 230 having the adhesive thereon adheres to the surface of substrate 240 at a position where initially applied from guide tip 216. The applicator system 200 allows a fiber pattern to be applied to any surface of any object without requiring such surface to be tacky.

The fiber pattern applicator systems of the invention can be easily operated by hand. The fiber writer device is held by a user in the same fashion as one would hold an ink pen. The fiber material is applied by drawing the fiber onto a substrate with a similar motion as drawing ink patterns from a pen. The fiber material can be unwound by hand from the fiber spool as more fiber material is needed.

Alternatively, the fiber pattern applicator systems can be implemented in an automated system. For example, the fiber writer device and fiber spool can be attached to a conventional automated mechanical or reticulated arm that is in operative communication with a computer. A specified fiber pattern is input into the computer, which feeds instructions to the arm to produce the motions needed to draw the fiber pattern. When automated, the fiber pattern applicator systems can be used in mass production of desired fiber-patterned products such as various sensors.

It should be noted that there is no limitation on the fiber pattern that can be produced by the applicator systems of the invention other than the physical characteristics of the fiber material and the adhesive on the substrate or the fiber. For example, an optical fiber has a specified bend radius that cannot be exceeded without damaging the optical fiber.

The applicator systems allow dense fiber packages to be fabricated in a variety of sizes for use in various sensors such as anti-tamper sensors, board (e.g., printed wiring board) level sensors, and chassis level sensors. For example, the fiber packages can be used in sensor systems with board level or chassis level anti-tampering requirements.

The present invention may be embodied in other specific forms without departing from its essential characteristics. The described embodiments are to be considered in all respects only as illustrative and not restrictive. The scope of the invention is therefore indicated by the appended claims rather than by the foregoing description. All changes that come within the meaning and range of equivalency of the claims are to be embraced within their scope.

## Claims

1. A fiber pattern applicator system, comprising:
a fiber writer device comprising;
a hollow tube having a fiber channel extending therethrough from a proximal end
to a distal end;
a fiber input aperture at the proximal end of the tube; and
a fiber guide tip at the distal end of the tube;
a fiber spool; and
a continuous fiber material wound on the fiber spool and threaded through the fiber channel from the input aperture through the fiber guide tip of the fiber writer device.

2. The system of claim 1, wherein the fiber material comprises an optical fiber.

3. The system of claim 1, wherein the fiber material comprises a metallic wire.

4. The system of claim 1, wherein the fiber material comprises thread, yarn, or rope.

5. The system of claim 1, further comprising a delivery mechanism in the fiber guide tip for applying an adhesive material to the fiber material.

6. The system of claim 5, wherein the delivery mechanism comprises a sponge saturated with an adhesive material,

7. The system of claim 2, wherein the optical fiber is adapted to be applied to a substrate comprising a double-sided adhesive tape.

8. The system of claim 7, wherein the double-sided adhesive tape includes an epoxy material for holding the optical fiber in place.

9. The system claim 7, wherein the optical fiber is adapted to form an anti-tamper sensor when applied to the substrate.

10. The system of claim 9, wherein the anti-tamper sensor is a board level sensor or a chassis level sensor.
